# EUROPEAN PATENT SPECIFICATION

(11) **EP 2 647 175 B1**
(45) Date of publication and mention of the grant of the patent: **04.04.2018**
(21) Application number: 10788307.6
(22) Date of filing: 03.12.2010
(51) Int. Cl.: H04L 29/08, H04W 28/12

(54) **FACILITATING DEVICE-TO-DEVICE COMMUNICATION**
ERMÖGLICHUNG DER KOMMUNIKATION VON GERÄT ZU GERÄT
PROCÉDÉ POUR FACILITER UNE COMMUNICATION ENTRE DES DISPOSITIFS

(43) Date of publication of application: 09.10.2013
(73) Proprietor: Nokia Technologies Oy, 02610 Espoo (FI)
(72) Inventor: VAN PHAN, Vinh, FI-90100 Oulu (FI); HAKOLA, Sami, FI-90450 Kempele (FI); KOSKELA, Timo, FI-90120 Oulu (FI)
(74) Representative: Ruuskanen, Juha-Pekka
(86) International application number: PCT/EP2010/068824
(87) International publication number: WO 2012/072144

(56) References cited:
- WO-A1-2007/048364
- US-A1- 2002 181 501
- US-A1- 2003 081 580
- US-A1- 2006 268 933
- US-A1- 2010 093 364
- US-A1- 2010 246 518

## Description

### FIELD

The invention relates to the field of telecommunications and, particularly, to device-to-device communication.

### BACKGROUND

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context. The evolvement of wireless cellular communications technologies to support wireless packet data transmission has explosively increased the amount and use of different services provided by video streaming and other multimedia applications. Hence, the requirements relating to said services in wireless cellular networks, such as high speed, high quality of service (QoS), and energy efficiency to enable broadband wireless access for battery driven handheld devices, have become key targets in development in the wireless cellular networks. One of technologies aimed to increase energy-efficiency, spectral efficiency and QoS of a broadband wireless network is a cellular device-to-device (D2D) communication, i.e. a direct communication between end devices of the communication, such as user equipments and/or terminals, and/or servers. Although the cellular device-to-device communication is controlled by a base station, or corresponding access device/apparatus responsible for radio resources, the cellular device-to-device communication may include transmitting and receiving information directly to/from a peer device without the aid or assistance of the base station, or corresponding access device.

WO2007/048364 describes a method for operating a mobile terminal in a communication network in which a protocol stack constructed from a communication protocol or from a plurality of communication protocols is used by the mobile terminal to use at least one service from the communication network, and a decision-making device uses decision-related event data to ascertain, for at least one service individually, whether a change needs to be made and, if appropriate, to decide, for the at least one service individually, what type of change needs to be made and what communication protocol or what communication protocols need to be used to make the change.

US2006/0268933 describes an apparatus for controlling an operation of a plurality of communication layers of a layered communication system.

US2003/0081580 describes a reconfigurable multi-media system that provides monitoring and reconfiguration of a plurality of communication layers of a communication stack to dynamically reconfigure the modulation and coding of software defined radio.

US2010/0093364 describes an approach for providing interference measurements for device-to-device communication. A logic generates a control signal to instruct a plurality of stations to perform measurement relating to interference or path loss by the stations. The logic then receives measurement information from the stations and determines, based on the measurement information, whether resources are to be schedules to provide direct communication between two of the stations.

### SUMMARY

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later. Aspects of some embodiments include inter-layer interaction between an application layer entity and one or more link layer entities in case of device-to-device communication, the entities locating in a device participating to the device-to-device communication.

Various aspects of the invention comprise a method, an apparatus, a system and a computer program product as defined in the independent claims. Further embodiments of the invention are disclosed in the dependent claims.

### BRIEF DESCRIPTION OF THE DRAWINGS

In the following different embodiments will be described in greater detail with reference to the attached drawings, in which
Figure 1 shows simplified architecture of a network and a schematic diagram of an apparatus according to an embodiment; Figure 2 shows an example of a protocol stack in an apparatus;
Figure 3 is a flow chart illustrating an example of inter-layer interaction; and
Figure 4 illustrate signalling according to an example.

### DETAILED DESCRIPTION OF SOME EMBODIMENTS

Exemplary embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Embodiments of present invention are applicable to any end device (e.g. user equipment), access device (e.g. base station), corresponding components, corresponding apparatuses, and/or to any communication system or any combination of different communication systems supporting device-to-device communication. The communication system may be a wireless communication system or a communication system utilizing both fixed networks and wireless networks. The protocols used and the specifications of communication systems, and apparatuses, especially in wireless communication, develop rapidly. Such development may require extra changes to an embodiment.

Therefore, all words and expressions should be interpreted broadly and are intended to illustrate, not to restrict, the embodiment.

In the following, different embodiments will be described using, as an example of an access architecture to which the embodiments may be applied, a radio access architecture based on Long Term Evolution (LTE) Advanced, LTE-A, specified in 3GPP (Third Generation Partnership Project), without restricting the embodiments to such an architecture, however.

Other examples of access architecture include WiMax, WiFi, 4 G (fourth generation) and Mobile Broadband Wireless Access (MBWA). LTE is a packet-only wideband radio access with flat architecture that provides higher data speeds and reduced packet latency and supports various services, such as highspeed data, multimedia unicast and multimedia broadcast services.

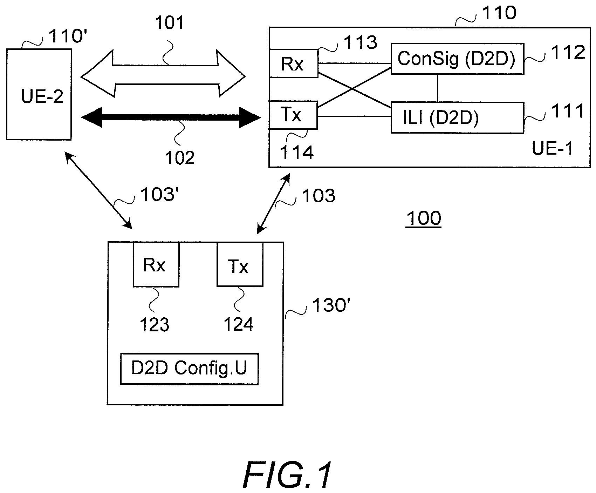

A general architecture of LTE-A, or more precisely a radio access network 100 implementing LTE-A device-to-device communication, is illustrated in Figure 1. Figure 1 is a simplified architecture only showing user equipment 110 configured to be in a device-to-device connection on communication channels 101 (only one shown in Figure 1), in a cell provided by a base station 120, with one or more other user equipments (only one shown in Figure 1) 110', the user equipments having some elements and functional entities (only illustrated with user equipment 110 in the example, although user equipment 110' also contains them), all being logical units whose implementation may differ from what is shown.

The user equipment 110, 110' illustrates an apparatus to which resources on the air interface are allocated and assigned and which may act as an end party of a communication between parties, and thus any feature described herein with user equipment may be implemented with a corresponding apparatus or device/end device, such as a server apparatus, or a proxy apparatus having an application with which an application in the user equipment may communicate. However, for the sake of clarity, term "user equipment" is used below. The user equipment 110, 110' refers to a computing device, examples of which include wireless portable mobile communication devices operating with or without a subscriber identification module (SIM), including, but not limited to, the following types of devices: mobile phone, smartphone, personal digital assistant (PDA), handset, laptop computer, e-reading device.

The user equipment 110, 110' is configured to perform one or more of user equipment functionalities described below with an embodiment, and it may be configured to perform functionalities from different embodiments. For this purpose, the user equipment comprises an inter-layer interaction unit (ILI) 111 for device-to-device communications for providing functionality to provide joint channel-aware and application aware adaptation across all layers of a protocol stack according to one or more of the embodiments described below. In the illustrated example the user equipment comprises also a control signalling unit (ConSig) 112 for device-to-device communications for providing end-to-end application control signalling 102 between the user equipments in a device-to-device communication according to one or more of the embodiments described below and for providing control signalling 103, 103' between the user equipment and the base station according to one or more of the embodiments described below.

Further, the user equipment comprises a receiving unit 113 for receiving different inputs, control information, user data and messages, for example, and a sending unit 114 for sending different outputs, control information, user data and messages, for example. As stated above, both user equipments comprise one or more of the units, although they are illustrated in Figure 1 only with one of the user equipments.

The base station, or advanced evolved node B, or a corresponding apparatus, 120 is a computing device configured at least to control, including at least assigning, the radio resources. Herein, for the sake of clarity, term "base station" is used for this type of an apparatus/device. Typically, but not necessarily, the base station comprises all radio-related functionalities of the communication whereby the base station, for example, schedules transmissions by assigning specific resources for the user equipments 110 and 110' for their device-to-device communication 101, and may control the power used in the device-to-device communication 101. In the illustrated example the base station comprises also a configuration unit (Config-U) 121 for providing configuration information or other additional information for establishing and/or updating the device-to-device communication 101. In other words, the control information exchange 103, 103' for device-to-device may include resource assignment(s), power settings and/or configuration information. Further, the base station comprises a receiving unit 123 for receiving different inputs, control information, user data and messages, for example, and a sending unit 124 for sending different outputs, control information, user data and messages, for example.

It should be appreciated that the apparatuses may comprise other units used in or for information transmission and for switching to/from a device-to-device transmission mode to another transmission mode, and the different layers, described in more detail below, may perform other functions. However, they are irrelevant to the actual invention and, therefore, they need not to be discussed in more detail here.

Although the apparatuses, such as the user equipment and the base station, have been depicted in Figure 1 as one entity, they may be implemented in one or more physical or logical entities. Their units and functions may be software and/or software-hardware and/or firmware components (recorded indelibly on a medium such as read-only-memory or embodied in hard-wired computer circuitry).

The user equipment, base station, and corresponding apparatuses implementing functionality or some functionality according to an embodiment may generally include a processor (not shown in Figure 1), controller, control unit, microcontroller, or the like connected to a memory and to various interfaces of the apparatus. Generally the processor is a central processing unit, but the processor may be an additional operation processor. The inter-layer interaction unit (ILI) 111, and/or the control signalling unit 112 and/or the configuration unit 121 may be configured as a computer or a processor, or a microprocessor, such as a single-chip computer element, or as a chipset, including at least a memory for providing storage area used for arithmetic operation and an operation processor for executing the arithmetic operation. The inter-layer interaction unit (ILI) 111, and/or the control signalling unit 112 and/or the configuration unit 121 may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions of one or more embodiments.

The receiving units and the transmitting units each provides an interface in an apparatus, the interface including a transmitter and/or a receiver or a corresponding means for receiving and/or transmitting information, such as data, content, control information, messages and performing necessary functions so that user data, content, control information, signalling and/or messages can be received and/or transmitted, either in a device-to-device mode and/or in a conventional mode in which the communication passes via one or more network nodes (including the base station). The receiving and sending units may comprise a set of antennas, the number of which is not limited to any particular number.

The apparatuses, such as the user equipments and base stations, may generally include volatile and/or non- volatile memory and typically store content, data, or the like. For example, the memory may store computer program code such as software applications (for example, for the inter-layer interaction unit, and/or the control signalling unit and/or the configuration unit) or operating systems, information, data, content, or the like for the processor to perform steps associated with operation of the apparatus in accordance with embodiments. The memory may be, for example, random access memory, a hard drive, or other fixed data memory or storage device. Further, the memory, or part of it, may be removable memory detachably connected to the apparatus.

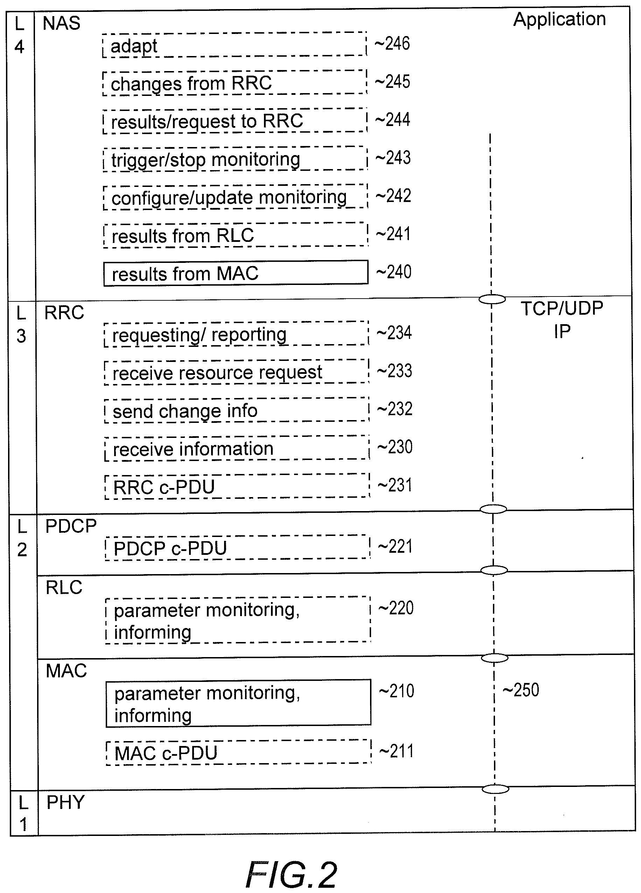

Figure 2 illustrates an example of a protocol stack for user equipment. In the illustrated example new functionalities and/or data units for device-to-device communications are shown, the ones shown in solid lines (i.e. those relating to monitoring/monitored parameters of logical channels) are implemented in all embodiments and the ones having dashed line are optional. In the example the protocol stack is a combination of protocol stacks for a control plane (call control and signalling) and for a user plane (traffic).

It should be appreciated that other entities, data units, and/or functionalities may also be involved in a device-to-device communication. For example, features disclosed with cross-layer optimization of a transmission over a wireless network can be implemented to device-to-device communication without any difficulty since the only difference is that transmission over wireless network is a transmission over several links, whereas device-to-device communication is a transmission over one link. Actually device-to-device facilitates the implementation of the cross-layer optimization, since in device-to-device there are virtually no inter-operator problems, there are no variation of protocol stacks of radio links because only one radio link is involved, "network" monitoring causes less delay and less protocol overhead compared to a situation in which several nodes participate to the transmission. Examples of such cross-layer optimizations include a radio link adaptation via a layer 1 and layer 2 interaction and smart scheduling, combining IP and radio access network protocol stacks for optimal tradeoffs between application robustness and spectrum efficiency, video transmissions for video calls, multiplayer video games, etc. over a wireless network.

Starting from the bottom, a layer 1 (L1), also called a physical layer (PHY), takes care of the actual transmission over physical media and provides a radio interface. The physical layer may perform encoding/decoding, multiplexing/demultiplexing of data, conversion between radio signals to digital signals, and the like.

Above the layer 1 is a layer 2 (L2), also called as a link layer or a data link layer, which in LTE comprises tree sublayers: a media access control (MAC) layer, a radio link control (RLC) layer and a packet data convergence protocol (PDCP) layer.

The MAC layer is responsible for scheduling data according to priorities, multiplexing data to layer 1 transportation blocks of different transport channels, distinguished by the characteristics (e.g. adaptive modulation and coding) with which the data are transmitted over the radio interface, selecting the most appropriate transport format, and mapping between the transportation channels and logical channels, which are characterized by the information carried by them.

The MAC layer also provides error correction for layer 1 transmissions by means of a hybrid automatic repeat request (HARQ), for example.

To facilitate a device-to-device communication, a MAC entity for the device-to-device communication is configured to monitor (point 210) parameters of specific logical channels and to inform (point 210) one or more of the upper layers on the monitoring results. Examples of parameters to monitor include packet error rates and expected packet delays. The MAC entity may monitor and/or determine, and/or conclude the packet error rates based on failure of relevant HARQ processes and/or packet drops caused, for example, by the fact that the MAC entity is not able to ensure required packet delays to be the ones which are configured to the monitored logical channels.

The MAC entity may monitor and/or determine, and/or conclude the expected packet delays based on, for example, scheduling properties and operations that depend on a radio interface configuration and/or a resource allocation and/or an expected scheduling latency, and/or a round trip time (RTT) and/or a latency of a transmission and/or a retransmission that also depend on radio channel condition(s). The monitoring may be triggered by an application control entity serving an application, such as an advanced multi-rate multi-layer multimedia application, the monitored logical channels being configured to serve the same application. Depending on an implementation, and/or configuration set by the application control entity, the MAC entity will inform one or more upper layers (i.e. corresponding entities in corresponding layers) on monitoring results. Depending on an implementation, and/or configuration set by the application control entity, the informing may be triggered by a request of an upper layer entity and/or an occurrence of a predetermined threshold based triggered events and/or the informing may be periodic. Examples of events include that a packet-error rate or expected packet delay on a monitored logical channel exceeds a threshold, such as 1% or 100ms. It should be appreciated that there may be many thresholds relating to different parameters or arguments (error rate or delay), properties/types of logical channels to be monitored, etc. The threshold(s) may be configured explicitly or derived from configured QoS parameters using predetermined rules, for example. The entities to be informed may be set in the configuration and/or they may be the ones requesting information or a requesting entity may indicate another entity (even in another layer) to which the information will be sent. An advantage provided by performing the monitoring in the MAC layer is that since MAC is responsible for scheduling, the MAC entity has an advanced awareness, compared to entities in other layers, on dynamic connection statuses or connection, and thereby a better predictive capability, the monitoring results are rather good pre-dictors.

An optional feature for a device-to-device communication, implemented in some embodiments, includes one or more MAC control protocol data units (c-PDU) 211 for end-to-end application control signalling between end devices in the device-to-device communication and/or for control signalling between the user equipment and the base station. The MAC c-PDUs for this purpose may include information provided by the application control entity as a MAC message, examples of said information comprising a video encoder and decoder dynamic reconfiguration or adjustment, capability negotiation, application-level monitoring and feedback control in general.

The RLC layer is responsible for segmenting and concatenating packet data units from the PDCP layer for radio interface transmission, i.e. it is used to format and transport traffic at least between the user equipment and the base station. Further, RLC layer provides three different reliability modes for data transport: acknowledged mode (AM), unacknowledged mode (UM), and transparent mode (TM). The RLC layer also provides in-sequence delivery of Service Data Units (SDUs) to the upper layers and eliminates duplicate SDUs from being delivered to the upper layers.

To facilitate a device-to-device communication, an RLC entity may be configured as an optional feature to be implemented in some embodiments/implementations, by the application control entity, to monitor (point 220) packet loss rates and average packet delays on radio bearer(s) to which one or more of the logical channels monitored by the MAC entity are mapped, and to inform one or more of the upper layers on monitoring results, as explained above with the MAC layer. Also with the RLC entity, depending on an implementation, and/or configuration set by the application control entity, the informing may be triggered by a request of an upper layer and/or an occurrence of a predetermined threshold based triggered events and/or the informing may be periodic, as explained above with the MAC layer. It should be appreciated that the expected packet delays obtained as a monitoring result of the MAC entity may be different form the average packet delays obtained as a monitoring result of the RLC entity.

The main functions of the PDCP layer include compressing/decompressing the headers of user plane IP packets, ciphering/deciphering for both user plane and control plane data, and integrity protection and verification for control plane data.

To facilitate a device-to-device communication, an optional feature that may be provided in some implementations, not necessarily in all, provided by the PDCP layer, includes one or more amended existing and/or new types of PDCP control protocol data units (c-PDU) 221 for end-to-end application control signalling between devices in the device-to-device communication to carry application control messages on the established radio bearer(s) and corresponding logical channel(s). An example of a new PDU type is "Control plane, D2D info", and the data in a PDU would then be the application control message. A further optional feature is to use the PDCP c-PDUs for control signalling between the user equipment and the base station.

A layer 3 (L3), also called a network layer, comprises for a control plane a radio resource control (RRC) layer, and for a user plane internet protocol (IP) layer above which are transmission control protocol (TCP)/user data protocol (UDP) layers, one of which is used for a user plane communication.

The RRC layer controls the usage of radio resources, manages user equipment's signalling and data connections and includes functions for handover. For example, the RRC layer is responsible for the setting up and maintenance of radio bearers.

As an optional feature, to facilitate a device-to-device communication, an RRC entity may be configured to receive (point 230) some monitored information and/or it may be configured to send (point 232) to the application control entity information on changes in the resource allocation, self-reconfiguration parameters, self-organizing network (SON) parameters, etc. The RRC entity may receive the monitored information, i.e. the results from the application control entity, and/or from the monitoring entity. The RRC entity may be configured to request itself the information (regardless of the "delivery route") or it may receive it without specifically requesting it. Further, the RRC entity may receive (point 233) a resource request from the application control entity, which may trigger (point 234) a device-to-device specific reporting or resource request to the hosting cellular system.

Another optional feature for a device-to-device communication, implemented in some embodiments, includes for end-to-end application control signalling between devices in the device-to-device communication one or more RRC control protocol data units (c-PDU) 231, or RRC messages, for reporting and requesting during the device-to-device communication with a procedure or procedures to carry said end-to-end application control signalling between peer entities of the end devices in the device-to-device communication. The procedure(s) may be similar to an RRC direct information transfer used to transmit non access stratum (NAS) signalling in the conventional mode between user equipment and a network (or more precisely, between the user equipment and a mobility management entity (MME) in a network side). A further optional feature is to use the PDCP c-PDUs for control signalling between the user equipment and the base station.

In the illustrated example, a layer 4 (L4), also called a transport layer, comprises an application layer for the user plane, and an application control. However, in another implementation, instead of combining the transport and application layers, the application layer may be above the transport layer in a protocol stack. It should be appreciated that the upper part implementation of a protocol stack does not affect to the functionality provided for device-to-device communication. The layer 4 provides end-to-end communication services for applications, and a non access stratum (NAS) for the control plane, and supports signalling and traffic between end parties (and a core network if involved). For example, NAS is used for control-purposes relating to a network attach, authentication, setting up of bearers, and mobility management.

For a device-to-device communication, the layer comprises the application control entity.

To facilitate the device-to-device communication, the application control entity is configured to receive (point 240) results of the parameter monitoring performed by the MAC entity. Depending on the implementation and embodiment, the application control entity may further be configured to receive (point 241) results of the parameter monitoring performed by the RLC entity. Depending on an embodiment/implementation, the application control entity may be configured, either as a self-configuration or assisted by a network or a base station, to set and/or update (point 242) configuration parameters (i.e. configure and reconfigure) in the MAC entity and/or the RLC entity, the configuration parameters defining for the entity what parameters to monitor and/or when to send to monitoring results and/or to which entities the results are send. Further, the application control entity may be configured to trigger (point 243) the parameter monitoring of the MAC entity, and/or the RLC entity, and to instruct to stop the monitoring. Depending on the implementation and embodiment, the application control entity may further be configured to send (point 244) at least some of the received monitoring results to the RRC entity and/or a resource request to the RRC entity. In addition, depending on the implementation and embodiment, the application control unit may be configured to receive (point 245) from the RRC entity information or indication of changes in resource allocation, such as a change in provided bit rates or in a throughput of the air interface, self-reconfiguration parameters, etc. so that the application control entity may adapt (point 246) configuration and operation of a corresponding application, such as a video encoder or decoder, accordingly.

In an implementation and/or embodiment, at least one logical channel 250 is configured to carry the application control signalling between the peer entities of the end devices. The above mentioned PDCP c-PDUs may be used with the logical channel. However, it should be appreciated that the logical channel for the specific purpose may be implemented without implementing said PDCP c-PDUs.

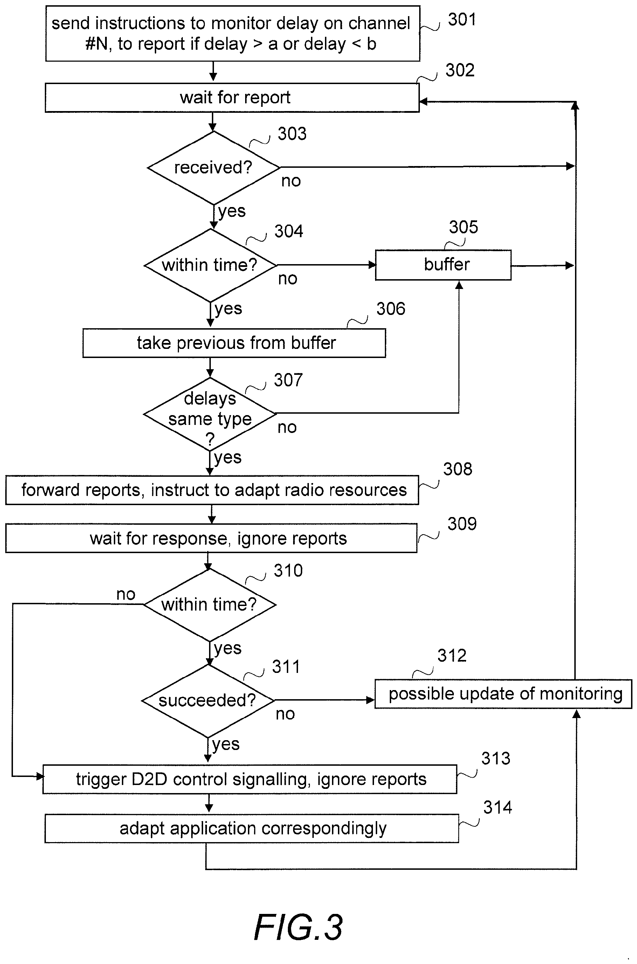

Figure 3 is a flow chart illustrating functionality of an application control entity according to an example in which device-to-device communication has been triggered and in which the "decision making" is performed by the application control entity, and in which the quality of service provided by the over air link, in this example a radio link, between the devices is determined by a delay. The example is intended merely to illustrate one possibility to cross-layer optimization providing very fast reaction to changes on the radio link conditions, without restricting embodiments and implementations to the illustrated example. For example, the "decision making" may be split and other rules or conditions used for deciding what to do.

The application control entity configures, in step 301, a corresponding MAC entity by sending to the MAC entity instructions to monitor channels reserved for the device-to-device communication (in the example channel #N) and to report back, if the delay is bigger than "a" or smaller than "b". The MAC entity configures itself correspondingly and starts to monitor (not illustrated in Figure 3), meanwhile the application control entity waits, in step 302, for a report.

When a report is received (step 303) the application control entity checks, in step 304, whether or not the report is received within a predetermined time period after a previous report. The time period may depend on the application for which the device-to-device communication is established. If the time between the previous report and the current report is longer than the time period, or the report is the first one, the application control entity buffers, in step 305, the report at least for the predetermined time, and then continues the waiting (step 302).

If the time between the previous report and the current report is within the time period (step 304), the application control entity takes, in step 306, the previous report from the buffer and then checks, in step 307, whether the previous report and the current report both indicate either bigger than "a" or smaller than "b", i.e. whether the content has the same type. If they are of different type, this indicates that the quality changes up and down, and adapting resources would not solve the problem. Therefore, if they are of different type, the process continues to the buffering step 305 to buffer the latest received report.

If the reports have the same type of content (step 307), the application control entity forwards, in step 308, to an RRC entity the reports with an instruction to adapt radio resources allocated to the end-to-end communication correspondingly. Then, if the delays are bigger than the limit, the RRC entity requests further resources, or if the delays are smaller, the RRC entity may request releasing some resources, from the base station. However, these are not illustrated in Figure 3. Meanwhile, the application entity waits, in step 309, a response to the request and ignores reports received from the MAC entity (if any is received) for a predetermined time.

If a response is received within the predetermined period of time (step 310), and it indicates that radio resource adaptation succeeded (step 311), the application control entity may update, in step 312, configuration of the MAC entity by sending instructions updated according to the outcome of the resource adaptation. For example, channels to monitor may be added or removed. Then the process proceeds to step 302 to wait for a report.

If a response is not received within the predetermined period of time (step 310), or the response indicates that radio resource adaptation did not succeed (step 311), the application control entity triggers, in step 313, a device-to-device application control signalling between itself and a corresponding application control entity in the other device, and ignores reports received during the signalling. Above are described several ways how this signalling may be performed. When an agreement of application features, such as a used coding scheme, has been obtained, the application control entity adapts, in step 314, the application correspondingly, and the process proceeds to the step 312 in which the application control entity may update configuration of the MAC entity by sending instructions that take into account what was agreed.

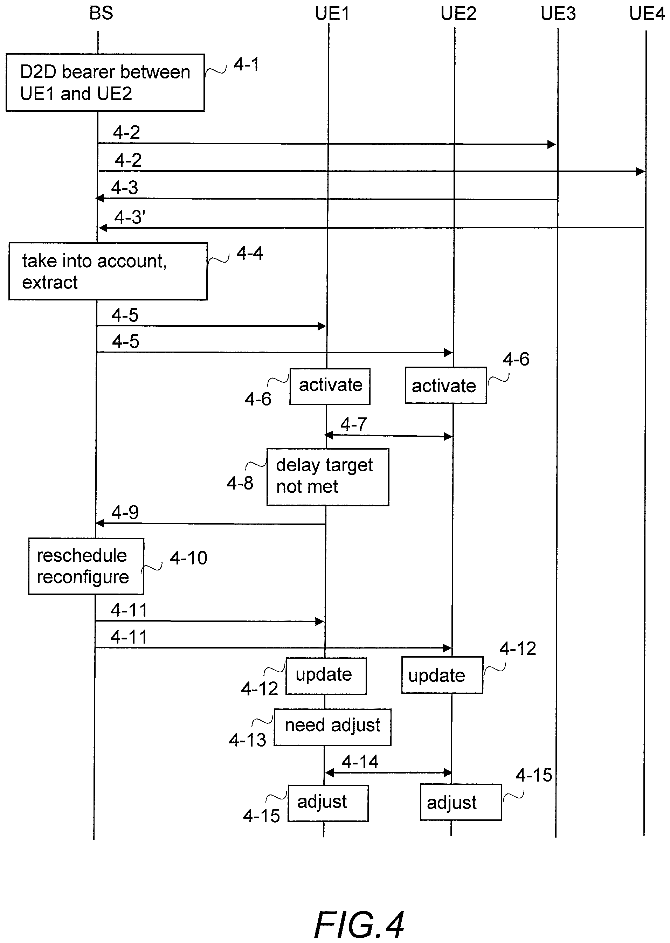

Figure 4 illustrates signalling according to an embodiment providing network configured cross-layer optimization. In the illustrated example, when a base station detects, in point 4-1, that a device-to-device bearer is to be set for a specific service between user equipments UE1 and UE2, it checks, whether there are user equipments involved in a similar device-to-device connection, i.e. a device-to-device connection for the same service under a cell provided by the base station to determine some initial parameter values for the connection. In the illustrated example user equipments UE3 and UE4 have a similar type of device-to-device connection and therefore the base station sends message 4-2 to user equipments UE3 and UE4, message 4-2 being request a report about current settings used between UE3 and UE4 in their similar device-to-device connection. In another implementation the base station may be configured to request the report from one of user equipments UE3 and UE4 involved in the similar device-to-device connection. Further, in addition to or instead of the above examples, the base station may be configured to request such a report from UE1 and/or UE2.

When the base station receives the requested reports from UE3 and/or UE4 (messages 4-3, 4-3'), it takes them into account, in point 4-4, when scheduling sufficient resources for the device-to-device connection between UE1 and UE2. Further, the base station extracts, in point 4-4, from the reports initial parameter values for the device-to-device connection between UE1 and UE2, and sends them in messages 4-5 to UE1 and UE2.

Message 4-5 may be a device-to-device bearer setup message containing new control information element(s) or fields(s) to activate one or more of the above described functionalities relating to the cross-layer optimization in the device-to-device communication and to provide initial parameter values for the device-to-device communication. In other embodiments, no reports are requested in response to point 4-1, and message 4-5 may indicate only activation of one or more cross-layer optimization, and/or comprise beforehand from user equipment(s) obtained parameter values and/or parameter values stored for the base station in the network side to be used for this purpose.

In response to receiving message 4-5 containing the indication to activate, UE1 and UE2 activate, in point 4-6, the inter-layer interaction for cross-layer optimization, and establish, using end-to-end control signalling 4-7, the device-to-device communication using initial parameter values obtained in message 4-5. The end-to-end control signalling may be application control signalling, carried by any of the above disclosed c-PDUs. It should be appreciated that in some embodiments the user equipment is configured to activate the inter-layer interaction for each device-to-device communication without a specific indication to activate. Further, if no initial parameter values are obtained, the user equipment may be configured to negotiate on parameter values with the other user equipment, or to provide itself initial values to the parameters as part of a self-configuration.

When an application for which the device-to-device connection is established, is a real-time application, for example a game, scheduling factors, such as a TX/RX switching (transmitter/receiver switching) in a time division duplex (TDD) configuration, may contribute to delay and/or latency and/or a decision relating to whether or not a packet sent over the device-to-device communication is considered to be lost. In the illustrated example, the application is a real-time application and the application control entity has requested/recommended values for one or more delay related parameters, such as round-trip-delay, latency, ping, etc., each with a particular value for the device-to-device communication. However, in the example, a MAC layer entity in the user equipment UE1 detects, that a delay target defined by the one or more parameter values, is not met, because of a scheduling and/or TX/RX switching configuration, for example. Therefore, the user equipment UE1 (an RRC entity, for example) sends message 4-9 which is a control signalling request to reschedule resources and/or reconfigure TX/RX switching configuration by the network.

The rescheduled resources and/or reconfigured TX/RX switching configuration (point 4-10) are sent (messages 4-11) to both user equipments UE1 and UE2, which then update (point 4-12) their setting correspondingly.

In another implementation, instead of requesting rescheduling from the network side, user equipments UE1 and UE2 renegotiate about the required update(s) directly with each other, in which case message 4-9 may be sent after update (point 4-12) to inform the network side on the current configuration (which can be used as initial parameter values for another similar 2D2 connection), or no message 4-9 is sent.

In the illustrated example, user equipment UE1 detects, that there is a need to adjust application configuration or parameters, for example video source coding scheme. Therefore UE1 triggers the application control signalling (messages 4-14) with which the peer-entities agree on adjustment, and then adjust (point 4-15). The application control signalling may be performed on a channel dedicated to this, or in any other channel, and any control protocol data units for device-to-device control signalling may be used to carry application control information/application control messages.

The steps, points and signaling messages/internal information exchange shown in Figures 3 and 4 are in no absolute chronological order and some of the steps/points may be performed simultaneously or in an order different from the given one.

Other functions can also be executed between the steps/points or within the steps/points. Some of the steps/points or part of the steps/points can also be left out. The signaling messages are only exemplary and may even comprise several separate messages for transmitting the same information. In addition, the messages may also contain other information. The messages and steps/points can also be freely combined or divided into several parts. Furthermore, the names, types and/or contents of the messages may differ from the above-mentioned ones, if any is mentioned, as well as the protocols used.

As can be seen from the above, a device-to-device cross-layer optimization is facilitated, hence allowing for running advanced multimedia applications with notably low overhead, and enabling multiplayer network games using device-to-device communication, for example.

The techniques described herein may be implemented by various means so that an apparatus implementing one or more functions described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers.

The data storage medium or the memory unit may be implemented within the processor/computer or external to the processor/computer, in which case it can be communicatively coupled to the processor/computer via various means as is known in the art.

It will be obvious to a person skilled in the art that, as the technology advances, the inventive concept can be implemented in various ways. The invention and its embodiments are not limited to the examples described above but may vary within the scope of the claims.

## Claims

1. A method comprising
detecting a device-to-device communication between a first user equipment (110) and a second user equipment (110'); and triggering, responsive to receiving in the first user equipment (110) an indication from a base station (120), a cross-layer optimization between an application control entity and one or more link layer entities for the device-to-device communication;
**characterised in that** the method comprises requesting a report about current settings used for a similar device-to device communication;
receiving the report; and using the received report to provide initial values for the device-to-device communication.

2. A method as claimed in claim 1, wherein the cross-layer optimization comprises:
monitoring at least one parameter reflecting a quality of service provided to the device-to-device communication over an air interface; and
informing the application control entity or another upper layer entity on the monitoring results.

3. A method as claimed in claim 2, the method further comprising:
performing the monitoring by a medium access control layer entity and/or by a radio link control layer entity; and
configuring the monitoring by the application control entity.

4. A method as claimed in claim 3, wherein the configuring includes at least one of a group comprising defining one or more channels that are to be monitored, defining one or more parameters that are to be monitored, defining whether to inform in response to the application control entity and/or the other upper layer entity requesting a report and/or in response to a predetermined threshold being met and/or in response to a predetermined event occuring and/or to inform periodically, and/or defining the entities that are to be informed.

5. A method as claimed in claim 2, 3 or 4, the method further comprising adjusting resources and/or the application configuration on the basis of the monitoring results.

6. A method as claimed in any of the preceding claims, the method further comprising establishing a control signal channel and/or a logical channel (250) for providing end-to-end application control signalling between apparatuses in a device-to device communication.

7. A method as claimed in any of the preceding claims, the method further comprising receiving and/or sending control signalling relating to the device-to-device communication and being transmitted between a first apparatus participating to the device-to-device communication and a second apparatus in a network side.

8. A method as claimed in claim 6 or 7, wherein one or more medium access control layer control protocol data units and/or packet data convergence layer control protocol data units and/or radio resource control layer control protocol data units are used to carry information for the signalling.

9. A method as claimed in claim 8, wherein the information for the signalling is application control information.

10. A method as claimed in any of the preceding claims, further comprising:
receiving a request requesting a report about current settings used for the device-to-device communication; and sending the report.

11. A computer program product comprising computer program code configured to perform a method as claimed in any one of the claims 1 to 10 when executed on an apparatus.

12. An apparatus comprising means for implementing a method as claimed in any of claims 1 to 10.

13. An apparatus as claimed in claim 12, wherein the apparatus comprises at least one processor, and at least one memory including computer program code, the at least one memory and the computer program code configured to, with the at least one processor, implement the means.

14. An apparatus as claimed in claim 12 or 13, wherein the apparatus is a user equipment (110, 110') or a base station or a server or a proxy.

## Patentansprüche

1. Verfahren, das Folgendes umfasst:
Detektieren einer Einrichtung-zu-Einrichtung-Kommunikation zwischen einem ersten Benutzergerät (110) und einem zweiten Benutzergerät (110') und Auslösen, als Reaktion auf ein Empfangen im ersten Benutzergerät (110) einer Indikation von einer Basisstation (120), einer schichtübergreifenden Optimierung zwischen einer Anwendungssteuerentität und einer oder mehreren Streckenschichtentitäten für die Einrichtung-zu-Einrichtung-Kommunikation;
**dadurch gekennzeichnet, dass** das Verfahren Anfordern eines Berichts über gegenwärtige Einstellungen, die für eine ähnliche Einrichtung-zu-Einrichtung-Kommunikation verwendet werden;
Empfangen des Berichts und
Verwenden des empfangenen Berichts, um Anfangswerte für die Einrichtung-zu-Einrichtung-Kommunikation bereitzustellen, umfasst.

2. Verfahren nach Anspruch 1, wobei die schichtübergreifende Optimierung Folgendes umfasst:
Überwachen von mindestens einem Parameter, der eine Dienstqualität widerspiegelt, die der Einrichtung-zu-Einrichtung-Kommunikation über eine Luftschnittstelle bereitgestellt wird; und
Melden der Überwachungsergebnisse an die Anwendungssteuerentität oder eine andere Entität der oberen Schicht.

3. Verfahren nach Anspruch 2, wobei das Verfahren ferner Folgendes umfasst:
Durchführen der Überwachung durch eine Medienzugangssteuerschichtentität und/oder durch eine Funkstreckensteuerschichtentität und
Konfigurieren der Überwachung durch die Anwendungssteuerentität.

4. Verfahren nach Anspruch 3, wobei das Konfigurieren mindestens ein Element aus einer Gruppe beinhaltet, die Folgendes umfasst: Definieren eines oder mehrerer Kanäle, die überwacht werden sollen, Definieren eines oder mehrerer Parameter, die überwacht werden sollen, Definieren, ob gemeldet werden soll, als Reaktion darauf, dass die Anwendungssteuerentität und/oder die andere Entität der oberen Schicht einen Bericht anfordert bzw. anfordern, und/oder als Reaktion darauf, dass eine vorbestimmte Schwelle erfüllt ist, und/oder als Reaktion darauf, dass ein vorbestimmtes Ereignis auftritt, und/oder ob periodisch gemeldet werden soll, und/oder Definieren der Entitäten, an die gemeldet werden soll.

5. Verfahren nach Anspruch 2, 3 oder 4, wobei das Verfahren ferner Einstellen von Ressourcen und/oder der Anwendungskonfiguration auf Basis der Überwachungsergebnisse umfasst.

6. Verfahren nach einem der vorangegangenen Ansprüche, wobei das Verfahren ferner Aufbauen eines Steuersignalkanals und/oder eines Logikkanals (250) zum Bereitstellen einer Ende-zu-Ende-Anwendungssteuersignalisierung zwischen Vorrichtungen in einer Einrichtung-zu-Einrichtung-Kommunikation umfasst.

7. Verfahren nach einem der vorangegangenen Ansprüche, wobei das Verfahren ferner Empfangen und/oder Senden einer Steuersignalisierung, die sich auf die Einrichtung-zu-Einrichtung-Kommunikation bezieht und zwischen einer ersten Vorrichtung, die an der Einrichtung-zu-Einrichtung-Kommunikation teilnimmt, und einer zweiten Vorrichtung an einer Netzwerkseite übertragen wird, umfasst.

8. Verfahren nach Anspruch 6 oder 7, wobei eine oder mehrere Medienzugangssteuerschicht-Steuerprotokolldateneinheiten und/oder Paketdatenkonvergenzschicht-Steuerprotokolldateneinheiten und/oder Funkressourcensteuerschicht-Steuerprotokolldateneinheiten zum Führen von Informationen für die Signalisierung verwendet werden.

9. Verfahren nach Anspruch 8, wobei die Informationen für die Signalisierung Anwendungssteuerinformationen sind.

10. Verfahren nach einem der vorangegangenen Ansprüche, das ferner Folgendes umfasst:
Empfangen einer Anforderung, die einen Bericht über gegenwärtige Einstellungen, die für die Einrichtung-zu-Einrichtung-Kommunikation verwendet werden, anfordert; und
Senden des Berichts.

11. Computerprogrammprodukt, das Computerprogrammcode umfasst, der konfiguriert ist zum Durchführen eines Verfahrens nach einem der Ansprüche 1 bis 10, wenn er auf einer Vorrichtung ausgeführt wird.

12. Vorrichtung, die Mittel zum Implementieren eines Verfahrens nach einem der Ansprüche 1 bis 10 umfasst.

13. Vorrichtung nach Anspruch 12, wobei die Vorrichtung mindestens einen Prozessor und mindestens einen Speicher einschließlich Computerprogrammcode umfasst, wobei der mindestens eine Speicher und der Computerprogrammcode dazu konfiguriert sind, mit dem mindestens einen Prozessor die Mittel zu implementieren.

14. Vorrichtung nach Anspruch 12 oder 13, wobei die Vorrichtung ein Benutzergerät (110, 110') oder eine Basisstation oder ein Server oder ein Proxy ist.

## Revendications

1. Procédé consistant :
à détecter une communication de dispositif à dispositif entre un premier équipement utilisateur (110) et un second équipement utilisateur (110') ; et
à déclencher, à la suite de la réception dans le premier équipement utilisateur (110) d'une indication en provenance d'une station de base (120), une optimisation inter-couche entre une entité de commande d'application et une ou plusieurs entités de couche de liaison pour la communication de dispositif à dispositif ;
**caractérisé en ce que** le procédé consiste à demander un rapport concernant des réglages actuels utilisés pour une communication similaire de dispositif à dispositif ;
à recevoir le rapport ; et
à utiliser le rapport reçu pour fournir des valeurs initiales pour la communication de dispositif à dispositif.

2. Procédé selon la revendication 1, dans lequel l'optimisation inter-couche consiste :
à surveiller au moins un paramètre reflétant une qualité de service fournie à la communication de dispositif à dispositif sur une interface radio ; et
à informer l'entité de commande d'application ou une autre entité de couche supérieure sur les résultats de surveillance.

3. Procédé selon la revendication 2, le procédé consistant en outre :
à réaliser la surveillance au moyen d'une entité de couche de contrôle d'accès au support et/ou au moyen d'une entité de couche de commande de liaison radio ; et
à configurer la surveillance au moyen de l'entité de commande d'application.

4. Procédé selon la revendication 3, dans lequel la configuration comprend au moins un fait d'un groupe consistant à définir un ou plusieurs canaux qui doivent être surveillés, à définir un ou plusieurs paramètres qui doivent être surveillés, à définir s'il faut informer en réponse à l'entité de commande d'application et/ou à l'autre entité de couche supérieure demandant un rapport et/ou en réponse à un seuil prédéterminé qui est satisfait et/ou à la suite de la survenue d'un événement prédéterminé et/ou à informer de façon périodique et/ou à définir les entités qui doivent être informées.

5. Procédé selon la revendication 2, 3 ou 4, le procédé consistant en outre à ajuster des ressources et/ou la configuration d'application sur la base des résultats de surveillance.

6. Procédé selon l'une quelconque des revendications précédentes, le procédé consistant en outre à établir un canal de signal de commande et/ou un canal logique (205) pour fournir une signalisation de commande d'application de bout en bout entre des appareils dans une communication de dispositif à dispositif.

7. Procédé selon l'une quelconque des revendications précédentes, le procédé consistant en outre à recevoir et/ou à envoyer une signalisation de commande se rapportant à la communication de dispositif à dispositif et qui est transmise entre un premier appareil participant à la communication de dispositif à dispositif et un second appareil du côté réseau.

8. Procédé selon la revendication 6 ou 7, dans lequel une ou plusieurs unités de données de protocole de commande de couche de contrôle d'accès au support et/ou une ou plusieurs unités de données de protocole de commande de couches de convergence de données de paquet et/ou une ou plusieurs unités de données de protocole de commande de couche de commande de ressources radio sont utilisées pour transporter des informations pour la signalisation.

9. Procédé selon la revendication 8, dans lequel les informations pour la signalisation sont des informations de commande d'application.

10. Procédé selon l'une quelconque des revendications précédentes, consistant en outre :
à recevoir une demande demandant un rapport concernant des réglages actuels utilisés pour la communication de dispositif à dispositif ; et
à envoyer le rapport.

11. Produit-programme d'ordinateur comprenant un code de programme d'ordinateur configuré pour réaliser un procédé selon l'une quelconque des revendications 1 à 10 lorsqu'il est exécuté sur un appareil.

12. Appareil comprenant des moyens pour mettre en oeuvre un procédé selon l'une quelconque des revendications 1 à 10.

13. Appareil selon la revendication 12, dans lequel l'appareil comprend au moins un processeur et au moins une mémoire comprenant un code de programme d'ordinateur, la ou les mémoires et le code de programme d'ordinateur étant configurés, avec le ou les processeurs, pour mettre en oeuvre les moyens.

14. Appareil selon la revendication 12 ou 13, dans lequel l'appareil est un équipement utilisateur (110, 110') ou une station de base ou un serveur ou un serveur mandataire.
